# EUROPEAN PATENT SPECIFICATION

(11) **EP 2 061 271 B1**
(45) Date of publication and mention of the grant of the patent: **24.02.2016**
(21) Application number: 07721332.0
(22) Date of filing: 01.06.2007
(51) Int. Cl.: H04L 29/06, H04M 3/487, H04M 3/42

(54) **METHOD AND SYSTEM FOR PROVIDING MOBILE SERVICE AND MANAGEMENT CENTER SERVER THEREFOR**
VERFAHREN UND SYSTEM ZUR BEREITSTELLUNG EINES MOBILDIENSTES UND VERWALTUNGSZENTRALENSERVER DAFÜR
PROCÉDÉ ET SYSTÈME ASSURANT DES SERVICES MOBILES ET: SERVEUR DE CENTRE DE GESTION ASSOCIÉ

(30) Priority: 18.08.2006 CN 200610109880; 16.10.2006 CN 200610150544; 16.10.2006 CN 200610150542
(43) Date of publication of application: 20.05.2009
(73) Proprietor: Huawei Technologies Co., Ltd., Longgang District Shenzhen, Guangdong 518129 (CN)
(72) Inventor: ZHAO, Qin, Shenzhen, Guangdong 518129 (CN); GU, Chong, Shenzhen, Guangdong 518129 (CN); TIAN, Linyi, Shenzhen, Guangdong 518129 (CN)
(74) Representative: Haley, Stephen
(86) International application number: PCT/CN2007/001759
(87) International publication number: WO 2008/022522

(56) References cited:
- EP-A- 0 717 545
- EP-A- 1 670 237
- WO-A1-2006/024307
- WO-A2-02/42935
- CN-A- 1 720 757
- US-A1- 2002 191 795
- US-A1- 2006 116 117
- US-B1- 6 275 941

## Description

This application claims the priorities of CN Application NO. 200610150544.1 filed on Oct. 16, 2006, titled "METHOD, SYSTEM AND MANAGEMENT CENTER SERVER FOR PROVIDING MOBILE SERVICE", CN Application NO. 200610109880.1 filed on Aug. 18, 2006, titled "METHOD AND SYSTEM FOR PROVIDING MOBILE SERVICE", and CN Application NO. 200610150542.2 filed on Oct.16, 2006, titled "METHOD AND MANAGEMENT CENTER SERVER FOR SUBSCRIBING FOR A MOBILE SERVICE FOR A GROUP", which are incorporated herein by reference in their entireties.

### Field of the Invention

The present invention relates to the technical field of communications, in particular, to a method, a system and a management center server for providing mobile service.

### Background of the Invention

With the development of mobile service, users may receive abundant services and have various experiences. More and more organizations join the group of mobile Service Providers (SPs). However, some lawbreakers take advantage of this to illegally collect user information, such as the mobile phone number of a user, and send junk short messages to users, such as various advertisements. Moreover, by taking advantage of the situation that an individual user feels it too tired to inquire about the communication expenses because the information expenses are often relatively small, some SPs overcharge a user via "Wrong Service Subscription". This brings about very bad experience, or even economic loss, to users. Junk information occupies the bandwidth of the mobile carrier and leads to users' unceasing complaints, which brings troubles in maintenance and damages to brand recognition for the mobile carrier.

To protect the information of a subscribed user from being used by an illegal service provider and to maintain the progress of a normal mobile service, pseudocode technology is adopted by the mobile carrier. The existing pseudocode technology is a technology of security safeguards prepared for applications such as location service. The data service management platform of a carrier employs a pseudocode when interacting with an application server provided by an SP, so the SP cannot see the actual number of the user and the user information will not be leaked. As a result, security problem, which users worry about, can be effectively solved.

In the existing pseudocode solution, for group users, such as enterprise users and school users, a pseudocode is allocated to each user as the user ID. An index relation as shown in Table 1 is established between the pseudocode and the user number (which may be the actual mobile phone number of the user).

**Table 1**

| Pseudocode | User Number |
|---|---|
| PseudoCode21 | MSISDN1 |
| PseudoCode2 | MSISDN2 |
| PseudoCode3 | MSISDN3 |

Even if all the users in the group subscribe for the same mobile service, the application server may obtain the pseudocode of each user. In the subsequent service, the application server packages the service content into a message of certain format, and the pseudocode of the user is filled in the receiving address of the message, and then the message is sent out. Such a packaging and sending process occurs several times the same as the number of the group users.

When the carrier server side obtains a message from the application server, it resolves the pseudocode, finds the corresponding user number in Table 1 according to the pseudocode, and replaces the pseudocode with the user number in the receiving address of the message, and then sends the message to the user.

US 6 275 941 B1 discloses a method for performing user authentication by using a single integrated certificate in connection with different service requests made by the same user, and if valid, a user ID and a password was sent to perform anthentication.

US 2006/0116117 A1 discloses a method for protecting the security of user information in the case where user information leaks through hide a temporary user identifier in each service and enhance the safety of user information among a plurality if services to be cooperatively executed and to prevent the damage from spreading.

EP 0 717 545 A discloses methods and apparatus for enabling parties with similar interests to speak with one another through connections automatically established by equipment within the telephone network. The identities and telephone numbers of the other subscribers are maintained in a database and may be held in secrecy. Similarly, a requesting subscriber may create or retrieve telephone messages stored in a database according to the subject matter of the massage.

It is found by the inventor via investigation that for group users, a pseudocode needs to be allocated to each user in the above pseudocode technology, and the pseudocode of each user needs to be sent to the application server, thus a large amount of data needs to be maintained on the carrier server side. Additionally, for the same service content, it needs to be packaged and sent by the application server several times, and the only difference among a plurality of messages, which are used in this process, is that the pseudocode received is different. A plurality of similar messages is added to the network flow between the carrier and the SP. Moreover, because the carrier server needs to resolve each message received and replace its receiving address information, the load of the carrier server is also added.

### Summary of the Invention

Therefore, various embodiments of the invention provide a method, a system and a management center server for providing mobile service, so that the number of interactions between the carrier server side and the application server may be reduced, and the information security of the group and group users may be guaranteed.

The technical solution according to the embodiments of the invention includes:
A method for providing mobile services, comprising:
   receiving, by a management center server, a subscription checking request comprising a service ID and a group ID from a service engine, wherein the group subscription checking request is sent by the service engine when the service engine receives a first service message including the group ID and the service ID from an application server;
   checking, by the management center server, whether a group related to the receiver ID has subscribed for a service indicated by the service ID according to a group service subscription index;
   returning, by the management center server, a checking response to the service engine, wherein the checking response is a checking successful response or a checking failed response, and the checking successful response is used to trigger the service engine to obtain a group user ID that pertains to the group ID and send a second service message to a terminal.
A management center server for mobile services, comprising:
   a receiver, configured to receive a subscription checking request comprising a service ID and a group ID, wherein the group subscription checking request is sent by the service engine when the service engine receives a first service message including the group ID and the service ID from an application server; and
   a processor, configured to check whether a group related to the group ID has subscribed for a service related to the service ID according to a group service subscription index, and return a checking response to the service engine, wherein the checking response is a checking successful response or a checking failed response, and the checking successful response is used to trigger the service engine to obtain a group user ID that pertains to the group ID and send a second service message to a terminal.

A system for providing mobile services comprising an application server, a service engine, a user terminal, and a group information management server, further comprising a management center server as set out above.

### Brief Description of the Drawings

Figure 1 is a schematic diagram showing the flow chart of a process for configuring a group according to an embodiment of the invention;
Figure 2 is a schematic diagram showing the flow chart of a process for subscribing for a mobile service for a group according to an embodiment of the invention;
Figure 3 is a schematic diagram showing the flow chart of a process for providing a group service according to an embodiment of the invention;
Figure 4 is a schematic diagram showing the flow chart of the processing procedure of a management center server according to an embodiment of the invention;
Figure 5 is a schematic diagram showing the flow chart of a process in which a management center server cancels a service that is subscribed for a group according to an embodiment of the invention;
Figure 6 is a schematic diagram showing the flow chart of a process for deleting a group according to an embodiment of the invention;
Figure 7 is a schematic diagram showing the logic structure of a system for providing mobile service according to an embodiment of the invention;
Figure 8 is a schematic diagram showing the structure of a management center server according to an embodiment of the invention;
Figure 9 is a schematic diagram showing a message format from an application server according to an embodiment of the invention;
Figure 10 shows a service message generated for user Alice by a service engine according to an embodiment of the invention;
Figure 11 shows a service message generated for user Bob by a service engine according to an embodiment of the invention;
Figure 12 is a flow chart of a process in which a user initiatively accesses a service according to an embodiment of the invention; and
Figure 13 is a flow chart of a process in which a user initiatively accesses a service according to another embodiment of the invention.

### Detailed Description of the Embodiments

The embodiments of the invention are now further illustrated in conjunction with the drawings.

In an embodiment of the invention, a management center server stores a group service subscription index; a service processing server receives a service message from a service application server, and sends a subscription checking request including a service ID and a group ID to the management center server when it is resolved that the receiving party of the service message has a group ID; the management center server checks whether the group has subscribed for the service according to the group service subscription index that is stored, and when the verification is passed, a service engine obtains the group user ID that pertains to the group ID and sends a service message to the user terminal. Thus, the application server only needs to perform service interaction with the service engine, and the service engine obtains the group user ID and provides the service, so that it is convenient to unitedly subscribe for a mobile service for group users, and the number of interactions between the carrier server side and the application server may be reduced. Meanwhile, the information security of the group and group users may be guaranteed.

Preconfiguring a group and subscribing for a mobile service are the premise to implement the embodiments of the invention. Such operations only need to be performed before the service engine performs the corresponding operation, and no strict time limitation is laid.

The specific solution will now be illustrated in detail.

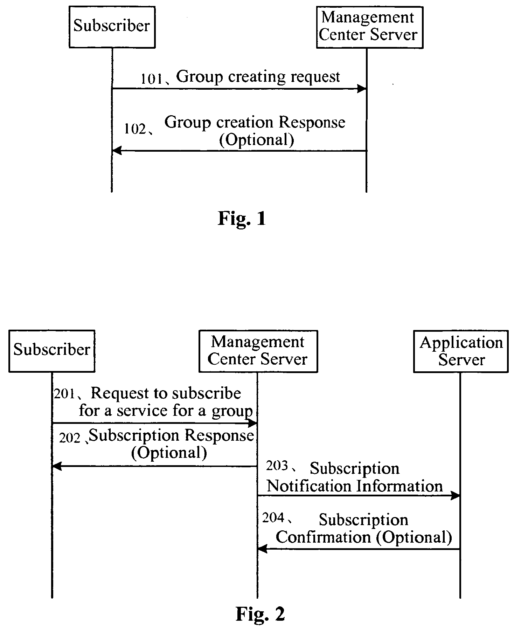

First of all, a group is configured, as shown in Figure 1. In this embodiment, the management center server has the function of group information management.

Step 101: A management center server configures a group according to a group creating request that is received, creates a group information index, and thus completes the configuration of the group.

The above group creating request may include a group ID. At this point, the management center server only needs to test the uniqueness of the group ID; in other words, the management center server only needs to ensure that the group ID is not the same as an existing group ID. Alternatively, the above group creating request may not include a group ID. Thus, the management center server needs to allocate a group ID to the group.

The above group creating request may further include the ID of the subscriber who initiates the group creating request, such as the mobile phone number of the subscriber, etc. The group creating request may further include: at least one user ID that belongs to the group, such as the mobile phone number of a user, etc.; and other information of the group, such as whether it is requested by the subscriber that a new user needs to obtain an authorization to join the group. The subscriber who initiates the group creating request may be the administrator of the group who can create and delete the group. Alternatively, the subscriber may be a charged user of a group service.

The above group information index may be in the form of a table, or it may be in other forms. Here, it will only be illustrated in the form of a table as an example.

The group information index table is as shown in Table 2:

**Table 2**

| Group ID (Mandatory) | Subscriber ID (Optional) | Group User ID (Mandatory) | Other Information of the Group (Optional) |
|---|---|---|---|
| group ID 1 | subscriber 1 | *user 1* | |
| | | *user 2* | |
| | | *user 3* | |
| | | ... | |

If the group creating request includes a user ID that belongs to the group, the management center server fills the user ID in the index table, as shown by the italic parts in Table 2. The number of the user ID in the table is the same as the number of the user ID in the group creating request, and specifically, the number may be one or more. If the group creating request does not include a group user ID, the management center server keeps the item as empty temporarily, and information will be filled in when a new user joins in this group in the future. In other words, the item Group User ID in Table 2 is a mandatory item, but the content of this item may be empty.

Step 102: The management center server sends a group creation response message, which carries state information, to the subscriber. If the state is "Successful", the message may include a group ID allocated by the management center server. If the state is "Failed", the message may include the failure cause. Current step is an optional step.

In conclusion, when the management center server has the function of group information management, one of the functions of the management center server is maintaining group information, including the creation, deletion and update of a group, etc.

If the management center server does not have the function of group information management, the function of group information management may be implemented by a group information management server. When the management center server and the group information management server lie in two independent physical entities, the group information management server directly receives a group creating request. At this point, the group information management server directly creates a group information index, and thus completes the configuration of a group. However, when the group configuration is completed, a group creation response message, which carries state information, may also be sent to the subscriber. The specific content here is the same as that of the embodiment shown in Figure 1, so it will not be described again.

Next, the management center server subscribes for a mobile service for the group and notifies the application server provided by the service provider of the subscription information. Subsequently, the application server only needs to send the service content to the group. For the specific process, reference may be made to Figure 2:

Step 201: The management center server receives a request for subscribing for a service for a group, and creates a group service subscription index. The request includes a group ID and at least one service ID. The group service subscription index at least includes: a group ID, and at least one service ID related to a group ID. In other words, the group service subscription index needs to indicate which services a group has subscribed for.

The group service subscription index may be in the form of a table, or it may be in other forms. Here, it will only be illustrated in the form of a table as an example. The group service subscription index table is as shown in Table 3.

**Table 3**

| Group ID (Mandatory) | Service ID (Mandatory) | Service Subscription Parameter (Optional) | SP ID (Optional) |
|---|---|---|---|
| group ID1 | service ID1 | | SP ID1 |
| | service ID2 | | SP ID2 |
| | service ID3 | | SP ID3 |
| | ... | | |

For the group service subscription index, a parameter that indicates the subscription requirement, such as service subscription parameter, SP ID and so on, may be included. For example, in digital newspaper service, the application server may be informed with a service subscription parameter that which subject should be provided in which time period everyday.

Step 202: The management center server sends a subscription response, which carries state information, to the subscriber that initiates the request. This step is an optional step.

Step 203: The management center server notifies the application server of the information subscribed for by the group. The message should include the group ID. If the group service subscription index table shown in Table 3 further includes a parameter that indicates the subscription requirement, the notification message should further include such parameter.

Step 204: The application server sends a subscription confirmation message to the management center server. This step is an optional step.

In practical applications, no strict limitation is laid on the time to perform Step 202. It may be performed between Step 201 and Step 203, or after Step 203 or Step 204.

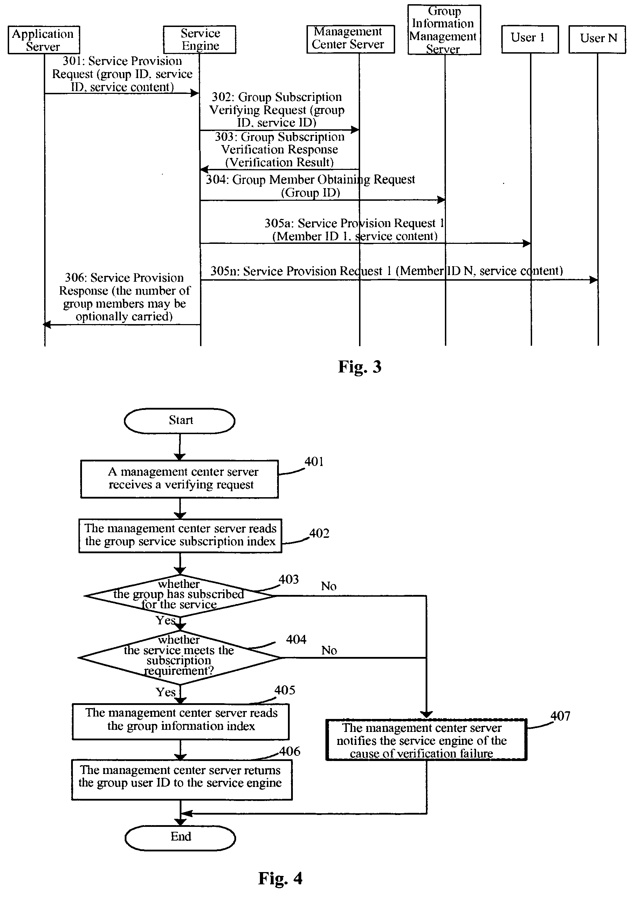

After the subscription process is performed, the application server of the service provider provides the group with the service. For the specific process, reference may be made to Figure 3:

Step 301: The application server provides the service engine with a service message, which includes the service content. The receiving party of the service message has a group ID, and the service message includes the service ID.

Step 302: The service engine resolves the receiving party of the service message, and sends a group subscription checking request, which includes the group ID and the service ID, to the management center server when it learns that the receiving party is a group.

Step 303: When the management center server receives the checking request, the management center server inquires the group service subscription index and checks whether the group has subscribed for the service indicated by the service ID; if yes, the checking is passed; otherwise, the checking is failed. Then, a checking response is returned.

Additionally, the checking request sent to the management center server by the service engine may further include a parameter for indicating the subscription requirement; when the management center server determines that the group has subscribed for a service, it may further determine whether the service meets the subscription requirement currently; if yes, the checking is passed; otherwise, the checking is failed.

Step 304: If the service engine receives a checking successful response and the response includes the address of a group information management server for storing the correlation between the group ID and the user ID in the group, the service engine obtains the group user ID that pertains to the group ID from the group information management server indicated by the address.

If the service engine receives a checking failed response, the process ends.

There may be many methods for a service engine to obtain the group user ID that pertains to the group ID. The above is only a method used for the case in which the management center server and the group information management server are different physical entities. There may exist other methods, such as the following.

If the above management center server and the group information management server are on the same physical entity, the service engine may directly obtain the group user ID that pertains to the group ID from the checking response returned by the management center server.

Moreover, if the service engine locally stores the correlation between the group ID and the user ID in the group, in other words, if the group information management server and the service engine are on the same physical entity, the service engine may obtain the group user ID that pertains to the group ID via local inquiry.

Moreover, if the service engine is locally configured with the address of a group information management server, the service engine is also able to locally obtain the address of a group information management server directly, and obtains the group user ID that pertains to the group ID from the group information management server indicated by the address.

Step 305a-305n: A service message is sent to each terminal respectively.

Step 306: The service engine returns a service provision response to the application server. The response may carry the number of group members, in other words, it indicates how many user terminals the service message is sent to. Thus, it is convenient for subsequent applications, such as counting, charging, etc.

Referring to Figure 4, the processing procedure of the management center server will now be illustrated in detail. In this embodiment, a group information index is available in the management center server.

Step 401: A management center server receives a group service checking request that includes a service ID from the service engine;
Step 402: The management center server inquires the group service subscription index and obtains the service ID corresponding to the group ID;
Step 403: It is determined whether the group has subscribed for the service indicated by the service ID, if yes, turn to Step 404; otherwise, turn to Step 407;
The specific determination method is as follows: it is checked whether the service ID in the inquiry request exists in the service IDs corresponding to the group ID in the group service subscription index, if yes, it is determined that the group has subscribed for the service; otherwise, the group has not subscribed for the service.

If the group service subscription index further includes a parameter indicating the subscription requirement, turn to Step 404; otherwise, turn to Step 405.

Step 404: The management center server determines whether the service meets the subscription requirement currently, if yes, turn to Step 405; otherwise, turn to Step 407;
If the parameter indicating the subscription requirement includes a service subscription parameter and/or a service provider ID, the specific determination method may be as follows.

It is determined whether the service currently meets the subscription requirement indicated by the service subscription parameter, and/or it is determined whether the service provider ID, which is resolved from the inquiry request that is received, is consistent with the service provider ID corresponding to the service ID in the group service subscription index, if yes, turn to Step 405; otherwise, turn to Step 407. For example, in the service subscription parameter, it is required that the digital newspaper service should be delivered to a terminal within the time period of 7: 00-8: 00 AM everyday by the application server. At this point, the management center server determines whether the time a message from the application server is received belongs to this time period, if yes, the subscription requirement is met.

Step 405: The management center server reads the group information index and obtains the user ID corresponding to the group ID that is to be inquired;
Step 406: The group user ID is put into a checking successful response and returned to the service engine, and then the process ends.

Step 407: The management center server notifies the service engine of the cause of checking failure, and the process ends.

In practical applications, the above Step 405 is an optional step, because if the group information index is not available in the management center server, in other words, if the management center server does not have the function of the group information management server, Step 405 and Step 406 do not exist. Instead, the management center server sends a checking response including the address of a group information management server, in which the correlation between the group ID and the user ID in the group is available, to the service engine; and the service engine obtains the group user ID that pertains to the group ID from the group information management server indicated by the address. Moreover, the above process may further include steps such as authenticating the application server provided by the service provider, charging and so on. Such newly added steps, or the change of the order of the determination steps, should not be understood as a restriction on the embodiments of the invention.

Moreover, the above Step 407 is also an optional step. In practical applications, when the checking on the management center server is failed, it may not need to inform the service engine of the failure cause, and the process ends directly.

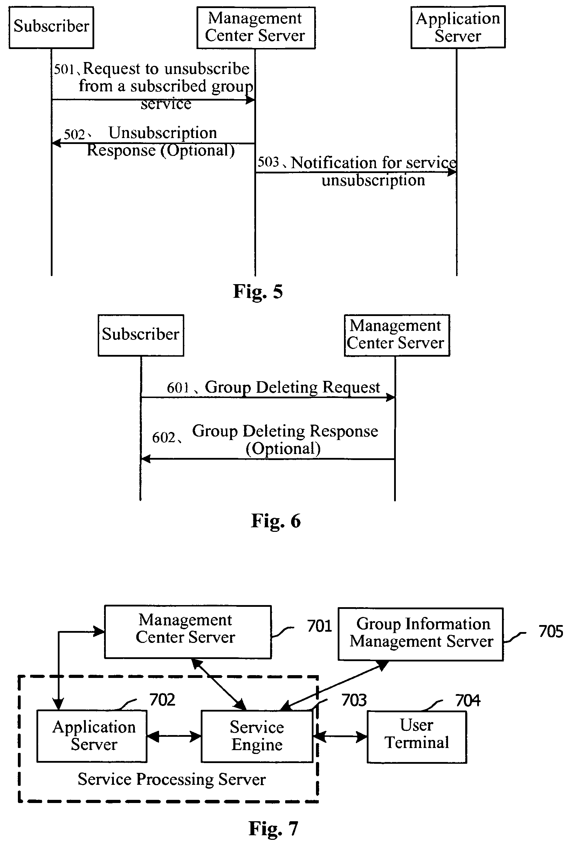

The management center server may further cancel a service subscribed for a group according to a received request. For the specific process, reference may be made to Figure 5:
Step 501: The management center server inquires the group service subscription index according to a request received for unsubscribing from a subscribed service, which includes a group ID and at least one service ID, and deletes the service ID corresponding to the group ID;
Step 502: The management center server sends a group service unsubscription response, which carries state information, to the subscriber that initiated the request; if the sate is "Successful", turn to Step 503; otherwise, the process ends. This step is an optional step.

Step 503: The management center server notifies the application server to cancel the service.

The management center server may further delete a created group according to a request received. For the specific process, reference may be made to Figure 6. In this embodiment, the management center server has the function of the group information management server.

Step 601: The management center server inquires the group information index according to a received group deleting request including a group ID, and deletes all the information corresponding to the group ID.

Before deleting the information, the management center server first inquires the group service subscription index and determines whether a service ID corresponding to the group ID exists. If yes, the management center server deletes the service ID corresponding to the group ID, and then inquires the group information index, deletes all the information corresponding to the group ID, and notifies the application server to cancel the service.

Step 602: The management center server sends a group deletion response, which carries state information, to the subscriber. This step is an optional step.

If the management center server does not have the function of the group information management server, the group information management server inquires the group information index according to the received group deleting request including a group ID, and deletes all the information corresponding to the group ID. Similarly, before the group information management server deletes all the information corresponding to the group ID, it may also first instruct the management center server to delete the service ID corresponding to the group ID.

An embodiment of the invention further discloses a system for providing mobile service, as shown in Figure 7, which includes an application server 702, a service engine 703, a user terminal 704, a management center server 701 and a group information management server 705.

The application server 702 is adapted to send a service message to a service engine.

The service engine 703 is adapted to receive the service message from the service application server 702, send a subscription checking request including the service ID and group ID to the management center server 701 when it is resolved that the receiving party of the service message is a group ID, obtain a group user ID that pertains to the group ID from the group information management server 705, and send a service message to the terminal user 704.

The management center server 701 is adapted to store a group service subscription index, receive a subscription checking request including the service ID and group ID, check whether the group has subscribed for the service according to the group service subscription index that is stored, and return a checking result. The specific checking method has been illustrated above, so it will not be described again here.

The group information management server 705 is adapted to store the correlation between the group ID and the user ID in the group.

The terminal user 704 is adapted to receive a service message from the service engine.

Because Figure 7 is only a schematic diagram showing the logic structure of the system, the service engine 703, management center server 701 and group information management server 705 may be independent physical entities respectively. Optionally, the service engine 703 is an independent physical entity, while the management center server 701 and the group information management server 705 are one physical entity; or, the service engine 703 and the group information management server 705 are one physical entity, while the management center server 701 is an independent physical entity.

Moreover, the management center server 701 may further be adapted to send a subscription notification for subscribing for a service for a group to the application server, and receive a subscription notification confirmation from the application server.

If the management center server 701 and the group information management server 705 are the same physical entity, the management center server 701 may further be adapted to receive a group deleting request that includes a group ID, inquire the group information index, and delete all the information corresponding to the group ID; or, receive a group deleting request that includes a group ID, inquire the group service subscription index, and determine whether a service ID corresponding to the group ID exists. If yes, the management center server deletes the service ID corresponding to the group ID, then inquires the group information index, and then deletes all the information corresponding to the group ID.

If the management center server 701 and the group information management server 705 are different physical entities, the group information management server 705 is further adapted to receive a group deleting request that includes a group ID, inquire the group information index, and delete all the information corresponding to the group ID; or, receive a group deleting request that includes a group ID, instruct the management center server 701 to determine whether a service ID corresponding to the group ID exists, and delete the service ID corresponding to the group ID when receiving a notification feedback from the management center server 701. At this point, the management center server 701 is further adapted to inquire the group service subscription index according to the notification received, and determine whether a service ID corresponding to the group ID exists. If yes, the management center server deletes the service ID corresponding to the group ID, instructs the application server 702 to cancel the service, and then returns a notification feedback to the group information management server 705.

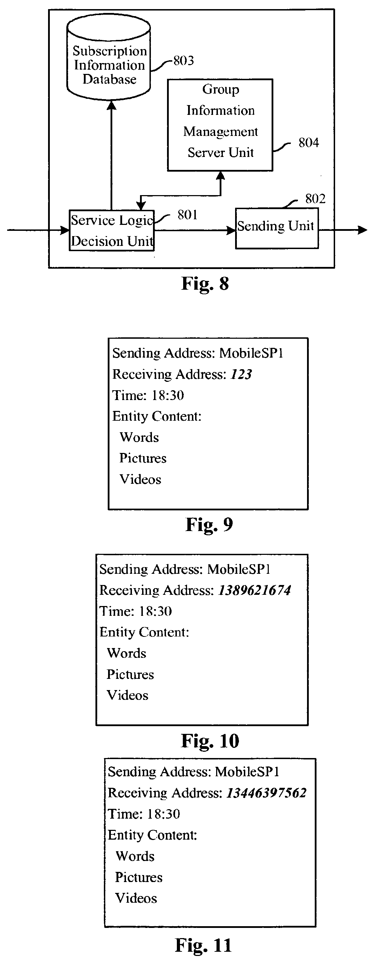

For the logic structure of the management center server 701, reference may be made to Figure 8, which includes:
a service logic decision unit 801, adapted to receive a subscription checking request including the service ID and group ID, inquire the subscription information database, check whether the group has subscribed for the service, and send the checking result to the sending unit 802;
a subscription information database 803, adapted to store a group ID and at least one service ID related to a group ID; and
a sending unit 802, adapted to send out the information received.

If the management center server and the group information management server are one physical entity, the management center server may further include: a group information management server unit 804, adapted to store the correlation between the group ID and the user ID in the group, and receive a request for inquiring the user ID in the group from the service logic decision unit 801.

Moreover, the service logic decision unit 801 is further adapted to receive a request for configuring a group, forward the request to the group information management server unit 804, and send the configuration result received from the group information management server unit 804 to the sending unit 802; or, receive a request for subscribing for a service for a group that includes a group ID and at least one service ID, establish a correlation between the group ID and the at least one service ID, and store the correlation in the subscription information database 803, and then send the subscription result to the sending unit 802.

The service logic decision unit 801 may further be adapted to receive a group deleting request that includes a group ID, forward the request to the group information management server unit 804, and send a configuration result that is received from the group information management server unit 804 to the sending unit 802; or
the service logic decision unit 801 may be adapted to receive a group deleting request that includes a group ID, and delete the service ID corresponding to the group ID in the subscription information database 803, when it is determined that there exists a service ID corresponding to the group ID after inquiring the subscription information database 803, and then forward the request to the group information management server unit 804 and send the configuration result received from the group information management server unit 804 to the sending unit 802.

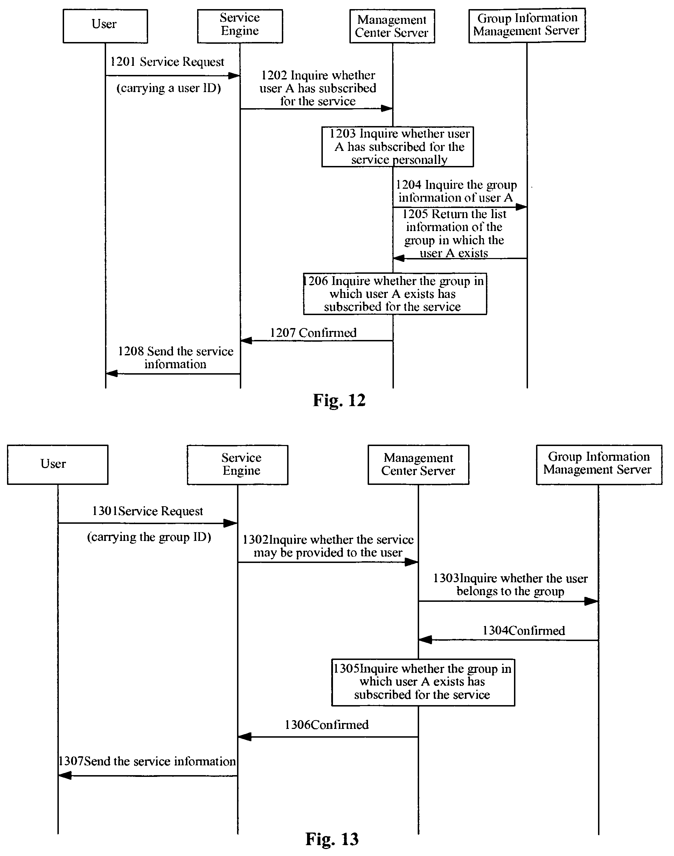

In the process shown in Figure 3, the network side initiatively delivers a service to a user terminal. In practical applications, a user may also initiatively request a service. The user may apply for service access via a user terminal or Internet, or in other ways. When the user applies for the service access, it may carry the user ID in the service request message, or the group ID may be carried. The service engine performs the corresponding operation according to different ID that is resolved. If the service engine resolves that the service request includes a user ID, the processing procedure is as shown in Figure 12; if the service engine resolves that the service request includes a group ID, the processing procedure is as shown in Figure 13. Hereinafter, illustrations will be made respectively.

Figure 12 is a flow chart of a process in which a user initiatively accesses a service according to an embodiment of the invention.

Step 1201: A user terminal initiates a service request message, which carries a user ID;
Step 1202: When the service engine receives the above request, it queries the management center server whether a service may be provided to the user;
Step 1203: The management center server searches to find whether the user terminal has subscribed for the requested service according to the user ID, if yes, turn to Step 1207; otherwise, turn to Step 1204;
The inquiry process in this step is consistent with the existing process in the prior art.

Step 1204-Step 1205: The management center server inquires of the group information management server about the group in which the user exists , and obtains the list information of the group in which the user exists;
If the management center server has the function of the group information management server, the above two steps are operations inside the management center server; if the management center server does not have the function of the group information management server, the above two steps are inter-device operations.

Step 1206: The management center server inquires about whether the group in which the user exists has subscribed for the service according to the group service subscription index, if any group in which the user exists has subscribed for the service, turn to Step 1207; otherwise, instruct the service engine that no service can be provided to the user;
Step 1207: A confirmation is returned;
Step 1208: The service engine sends the service content to the user according to the confirmation received.

Figure 13 is a flow chart of a process in which a user initiatively accesses a service according to another embodiment of the invention.

Step 1301: A user initiates a service request message, which carries the group ID;

Step 1302: When the service engine receives the above request, it inquires of the management center server about whether the service may be provided to the user terminal;
Step 1303-Step 1304: The management center server inquires of the group information management server about whether the user belongs to the group indicated by the above group ID, and the group information management server inquires about whether the user is included in the members of the group, if not, failure information is returned; otherwise, confirmation is returned;
If the management center server receives the failure information, it notifies the service engine that no service should be provided to the user. In this embodiment, it is assumed that the group information management server returns confirmation.

Similarly, if the management center server has the function of the group information management server, the above two steps are operations inside the management center server; if the management center server does not have the function of the group information management server, the above two steps are inter-device operations.

Step 1305-Step 1306: The management center server inquires about whether the group in which the user exists has subscribed for the service according to the group service subscription index, if any group in which the user exists has subscribed for the service, a confirmation is returned; otherwise, it notifies the service engine that no service should be provided to the user;
Step 1307: The service engine sends the service content to the user according to the confirmation received.

For the case in which a user initiatively requests a service, there also exists a system for providing mobile service, which includes a service processing server, a user terminal, a management center server and a group information management server.

The service processing server is adapted to receive a service request message from a user terminal, and resolve the ID in the service request message. If it is a user ID, the service processing server inquires of the management center server about whether the user terminal has subscribed for the requested service; if it is a group ID, it inquires of the management center server about whether a service may be provided to the user terminal, and sends the service content to the user terminal according to the confirmation returned from the management center server;
The management center server is adapted to determine that the user terminal has not subscribed for the requested service according to the user ID, or return a confirmation to the service processing server when it is determined that the group in which the user terminal exists has subscribed for the requested service according to the stored group service subscription index, after the management center server obtains the group list in which the user ID exists from the group information management server; or instruct the service processing server not to provide the service to the user when it is determined that the group in which the user terminal exists has not subscribed for the requested service;
The group information management server is adapted to save the correlation between the group ID and the user ID in the group;
The user terminal is adapted to send a service request, and receive the service content returned from the service processing server.

The above service processing server, management center server and group information management server may be independent physical entities respectively; or, the above service processing server is an independent physical entity, while the management center server and the group information management server are one physical entity; or, the above service processing server and the group information management server are one physical entity, while the management center server is an independent physical entity. The rest is similar to the above system, so it will not be described again here.

In all the above embodiments, it is illustrated by taking a service engine as an example. In practical applications, a service engine may be used, or an application server may be used, or other entities may also be used. Here, the above entities have a general name of service processing server; in other words, the service processing server may only include a service engine, or an application server, or both. At this point, the application server 702 and the service engine 703 shown in Figure 7 may be a service processing server.

The invention will now be further illustrated in conjunction with one specific example.

John is an employer of a company in Shanghai, and there are hundreds of employees in his company. A mobile service provider MobileSP1 may provide mobile users in Shanghai with digital newspaper service; in other words, it may send news information including words, pictures and videos to mobile users via an Multimedia Message System (MMS). John wants to offer a kind of welfare to his employees, i.e., he wants to enable his employees to read news in the metro when on their way to work and back in the morning/evening.

First of all, John goes to the carrier ChinaMobile to create a group. ChinaMobile allocates a group identifier (ID) 123 for John and stores the related information in the group information database of the management center server of ChinaMobile. In other words, a group information index as shown in Table 4 may be created, which is represented by the bold and underlined parts in Table 4. The italic parts in Table 4, i.e., group user IDs, may be created when John creates the group, or may be filled in when the employees who want to enjoy the group service join in the group which is created by John.

**Table 4**

| Group ID | Subscriber Information | Group User ID | Other Information of the Group (Optional) |
|---|---|---|---|
| **123** | **John: President of Company XX; Mobile Phone Number:** | *Alice: Employee of Company XX; Mobile Phone Number: 1389621674;* ... | |
| | **1303001926; ...** | *Bob: Employee of Company XX; Mobile Phone Number: 13446397562;* ... | |
| | | ... | |

Then, John goes to the management center of ChinaMobile, subscribes for the digital newspaper service provided by MobileSP1 for his Group 123, and requires that news information should be delivered to the terminals of the group users at 7: 30 AM and 18: 30 PM everyday. The management center server may create a subscription index for John's Group 123 and store the index information in the subscription information database. Table 5 shows a subscription index of Group 123.

**Table 5**

| Group ID | Service ID | SP ID | Service Subscription Parameter |
|---|---|---|---|
| 123 | Digital Newspaper ID: 01 | MobileSP1... | Time: 7:30 AM |
| | | | 18:30 PM |

Finally, the management center server of ChinaMobile notifies MobileSP1 to send news information to group ID 123 at 7: 30 and 18: 30 everyday. Meanwhile, the management center server may notify MobileSP1 of the number of users in Group ID 123.

At this point, the configuration of the group and the subscription of the service are completed.

Afterwards, the server of MoblieSP1 may provide the Multimedia Message System Client (MMSC) with the news information at 7: 30 and 18: 30 everyday, and indicate that the consumer of the news is Group 123. When the MMSC receives the message from the server of MoblieSP1, the message format of which is shown in Figure 9, the MMSC resolves the group ID 123 and inquires about two pieces of information from the management center server: 1) whether the news information provided by MoblieSP1 meets the requirement of John's subscription; 2) all the group user IDs in Group 123.

First of all, the management center server invokes the index table shown in Table 5 from the subscription information database according to the group ID 123, and determines that Group 123 has subscribed for the digital newspaper service according to the item Service ID, and determines that the message is from MobileSP1 according to the item SP ID. Then, the management center server determines whether the service currently meets the requirement of the service subscription parameter. When it is determined that the message is sent at 18: 30 as required, the first inquiry request of the MMSC is accomplished.

Then, the management center finds the group information to which Table 4 is directed according to the group ID 123, extracts the mobile phone numbers of group users Alice and Bob, 1389621674 and 13446397562, and returns them to the MMSC. At this point, the second inquiry request of the MMSC is accomplished.

In conjunction with the news content provided by MobileSP1, the MMSC generates an MMS, which is to be sent to the mobile phones of Alice and Bob, according to the mobile phone numbers of Alice and Bob. The message format is shown in Figure 10 and Figure 11.

The management center server and the application server, as well as the service engine and the management center server may employ - but is not limited to - interfaces of webservice. Simple Object Access Protocol (SOAP) is employed for message interaction. Hereinafter, only the SOAP message is adopted as an example for illustration.

As shown in Figure 2, the parameters of the message, i.e. GroupServiceSubscriptionReq, with which the management center server notifies the application server of the group subscription information, are shown in Table 6:

**Table 6: Parameters of GroupServiceSubscriptionReq**

| **Definition Returned** | **Importance** | **Type** | **Description** |
|---|---|---|---|
| MsgType | Mandatory | string | Message Type |
| TransactionID | Mandatory | string | Message Number |
| Version | Mandatory | string | Version number of the interface message |
| Send_Address | Mandatory | *address info sch ema* | The address of the sending party |
| Dest_Address | Mandatory | *address info sch ema* | The address of the receiving party |
| FeeUser_ID | Mandatory | *user id schema* | Charged User ID |
| Group_ID | Mandatory | *group id schema* | Used User ID |
| LinkID | optional | string | Transaction ID of temporary subscription relation |
| ActionID | Mandatory | integer | Codes of the service state management actions, specifically: |
| | | | 1: Subscribe for the service; |
| | | | 2: Stop the service; |
| | | | 3: Activate the service; |
| | | | 4: Pause the service; |
| ActionReasonID | Mandatory | integer | Codes of the causes of the service state management action, specifically: |
| | | | 1: Initiation action of a user |
| | | | 2: Initiation action of Admin&1860 |
| | | | 3: Boss suspended |
| | | | 4: Boss resumed |
| | | | 5: Boss transfer |
| | | | 6: Boss account deletion |
| | | | 7: Boss's number changed |
| | | | 8: Service cancellation caused by fee deduction failure |
| | | | 9: other |
| SPID | optional | string | Enterprise code of the SP |
| SPServicelD | Mandatory | string | Service code of the service in the SP |
| AccessMode | optional | Integer | Access mode of the service |
| | | | 1: WEB |
| | | | 2: WAP |
| | | | 3: SMS |
| FeatureStr | optional | binary | Subscription parameter of the service |

The parameters of the message, i.e. GroupServiceSubscriptionResp, with which the application server acknowledges the group subscription, are shown in Table 7:

**Table 7: Parameters of GroupServiceSubscriptionResp**

| **Field Name** | **Importance** | **Type** | **Description** |
|---|---|---|---|
| MsgType | Mandatory | string | Message Type |
| TransactionID | Mandatory | string | Message Number |
| Version | Mandatory | string | Version number of the interface message |
| hRet | Mandatory | integer | Successful Failed |

As shown in Figure 3, the parameters of the request, i.e. GroupUserInforReq, with which the service engine inquires of the management center server about the group user information, are shown in Table 8:

**Table 8: Parameters of GroupUserInforReq**

| **Definition Returned** | **Importance** | **Type** | **Description** |
|---|---|---|---|
| MsgType | Mandatory | string | Message Type |
| TransactionID | Mandatory | string | Message Number |
| Version | Mandatory | string | Version number of the interface message |
| Send_Address | Mandatory | *address_info_sc hema* | The address of the sending party |

| FeeUser_ID | Mandatory | *user_id_schema* | User ID that is charged |
|---|---|---|---|
| Group_ID | Mandatory | *group_id_schema* | Group user ID |
| SPID | optional | string | Enterprise code of the SP |
| ServiceType | Mandatory | string | Service Type: |
| | | | 1: Short Message |
| | | | 2: Multimedia Message |
| | | | 3: LCS |
| | | | 4: ....... |
| SPServicelD | Mandatory | string | Service code of the service in the SP |

The parameters of the response, i.e. GroupUserInforResp, with which the management center server provides the service engine with the group user information, are shown in Table 9:

**Table 9: Parameters of GroupUserInforResp**

| **Field Name** | **Importance** | **Type** | **Description** |
|---|---|---|---|
| MsgType | Mandatory | string | Message Type |
| TransactionID | Mandatory | string | Message Number |
| Version | Mandatory | string | Version number of the interface message |
| Group_ID | Mandatory | *group_id_schema* | group user ID |
| hRet | Mandatory | integer | 0: Successful |
| | | | 1: Failed |

In the embodiments of the invention, a management center server stores a group service subscription index; a service processing server receives a service message from a service application server, and sends a subscription checking request including the service ID and group ID to the management center server when it is resolved that the receiving party of the service message is a group ID; the management center server checks whether the group has subscribed for the service according to the group service subscription index that is stored, and when the group has subscribed for the service, a service engine obtains the group user ID that pertains to the group ID, and sends a service message to a user terminal. Thus, the application server only needs to perform service interaction with the service engine, and the service engine obtains the group user information, so that the service is provided. Therefore, it is convenient to unitedly subscribe a mobile service for group users, the number of interactions between the carrier server side and the application server may be reduced, and the network flow may be lowered. Meanwhile, information security of the group and the group user may be protected, and the possibility that an illegal or insecure service provider abuses the user information may be eliminated.

Additional advantages and modifications will readily occur to those skilled in the art. Therefore, the invention in its broader aspects is not limited to the specific details and representative embodiments shown and described herein. Accordingly, various modifications and variations may be made without departing from the spirit or scope of the invention as defined by the appended claims and their equivalents.

## Claims

1. A method for providing mobile services, comprising:
receiving (302), by a management center server (701), a group subscription checking request comprising a service ID and a group ID from a service engine (703), wherein the group subscription checking request is sent by the service engine when the service engine receives (301) a first service message including the group ID and the service ID from an application server;
checking (303), by the management center server, whether a group related to the group ID has subscribed for a service indicated by the service ID according to a group service subscription index;
returning (304), by the management center server, a checking response to the service engine, wherein the checking response is a checking successful response or a checking failed response, and the checking successful response is used to trigger the service engine to obtain a group user ID that pertains to the group ID and send (305a-305n) a second service message to a terminal.

2. The method according to claim 1, wherein the checking successful response includes:
an address of a group information management server for storing a correlation between the group ID and a user ID in the group; or
a group user ID that pertains to the group ID.

3. A management center server (701) for mobile services, comprising:
a receiver (801), configured to receive a subscription checking request comprising a service ID and a group ID from a service engine (703), wherein the group subscription checking request is sent by the service engine when the service engine receives (301) a first service message including the group ID and the service ID from an application server; and
a processor (801), configured to check whether a group related to the group ID has subscribed for a service related to the service ID according to a group service subscription index, and return a checking response to the service engine, wherein the checking response is a checking successful response or a checking failed response, and the checking successful response is used to trigger the service engine to obtain a group user ID that pertains to the group ID and send (305a-305n) a second service message to a terminal.

4. The management center server (701) according to claim 3, further comprising:
a group information management unit (804), configured to store the group ID related to the group and the user ID in the group ; and
a memory (803), configured to store the group service subscription index comprising a correlation between the group ID and at least one service ID related to a group ID.

5. The management center server (701) according to claim 3, wherein the checking successful response includes:
an address of a group information management server for storing a correlation between the group ID and the user ID in the group; or
a group user ID that pertains to the group ID.

6. A system for providing mobile services comprising an application server (702), a service engine (703), a user terminal (704), and a group information management server (705), further comprising a management center server (701) according to any of claims 3-5.

## Patentansprüche

1. Verfahren zum Bereitstellen mobiler Dienste, das Folgendes umfasst:
Empfangen (302), durch einen "Management Center"-Server (701), einer Gruppenabonnementüberprüfungsanforderung, die eine Dienst-ID und eine Gruppen-ID umfasst, von einer Dienst-"Engine" (703), wobei die Gruppenabonnementüberprüfungsanforderung durch die Dienst-"Engine" gesendet wird, wenn die Dienst-"Engine" eine erste Dienstnachricht, die die Gruppen-ID und die Dienst-ID enthält, von einem Anwendungsserver empfängt (301);
Überprüfen (303), durch den "Management Center"-Server, ob eine Gruppe, die zu der Gruppen-ID gehört, einen Dienst abonniert hat, der durch die Dienst-ID angegeben ist, gemäß einem Gruppendienstabonnementindex;
Zurückgeben (304), durch den "Management Center"-Server, einer Überprüfungsantwort zu der Dienst-"Engine", wobei die Überprüfungsantwort eine Überprüfung-erfolgreich-Antwort oder eine Überprüfung-fehlgeschlagen-Antwort ist und die Überprüfung-erfolgreich-Antwort verwendet wird, um auszulösen, dass die Dienst-"Engine" eine Gruppenanwender-ID erhält, die zu der Gruppen-ID gehört, und eine zweite Dienstnachricht zu einem Endgerät sendet (305a-305n).

2. Verfahren nach Anspruch 1, wobei die Überprüfung-erfolgreich-Antwort Folgendes enthält:
eine Adresse eines Gruppeninformationsmanagementservers zum Speichern einer Korrelation zwischen der Gruppen-ID und einer Anwender-ID in der Gruppe; oder eine Gruppenanwender-ID, die zu der Gruppen-ID gehört.

3. "Management Center"-Server (701) für mobile Dienste, der Folgendes umfasst:
einen Empfänger (801), der konfiguriert ist, eine Abonnementüberprüfungsanforderung, die eine Dienst-ID und eine Gruppen-ID umfasst, von einer Dienst-"Engine" (703) zu empfangen, wobei die Gruppenabonnementüberprüfungsanforderung durch die Dienst-"Engine" gesendet wird, wenn die Dienst-"Engine" eine erste Dienstnachricht, die die Gruppen-ID und die Dienst-ID enthält, von einem Anwendungsserver empfängt (301); und
einen Prozessor (801), der konfiguriert ist, zu überprüfen, ob eine Gruppe, die zu der Gruppen-ID gehört, einen Dienst abonniert hat, der zu der Dienst-ID gehört, gemäß einem Gruppendienstabonnementindex, und eine Überprüfungsantwort zu der Dienst-"Engine" zurückzugeben, wobei die Überprüfungsantwort eine Überprüfungerfolgreich-Antwort oder eine Überprüfung-fehlgeschlagen-Antwort ist und die Überprüfung-erfolgreich-Antwort verwendet wird, um auszulösen, dass die Dienst-"Engine" eine Gruppenanwender-ID erhält, die zu der Gruppen-ID gehört, und eine zweite Dienstnachricht zu einem Endgerät sendet (305a-305n).

4. "Management Center"-Server (701) nach Anspruch 3, der ferner Folgendes umfasst:
eine Gruppeninformationsmanagementeinheit (804), die konfiguriert ist, die Gruppen-ID, die zu der Gruppe gehört, und die Anwender-ID in der Gruppe zu speichern; und
einen Speicher (803), der konfiguriert ist, den Gruppendienstabonnementindex zu speichern, der eine Korrelation zwischen der Gruppen-ID und wenigstens einer Dienst-ID, die zu einer Gruppen-ID gehört, umfasst.

5. "Management Center"-Server (701) nach Anspruch 3, wobei die Überprüfungerfolgreich-Antwort Folgendes enthält:
eine Adresse eines Gruppeninformationsmanagementservers zum Speichern einer Korrelation zwischen der Gruppen-ID und der Anwender-ID in der Gruppe; oder
eine Gruppenanwender-ID, die zu der Gruppen-ID gehört.

6. System zum Bereitstellen mobiler Dienste, das einen Anwendungsserver (702), eine Dienst-"Engine" (703), ein Anwenderendgerät (704) und einen Gruppeninformationsmanagementserver (705) umfasst und das ferner einen "Management Center"-Server (701) nach einem der Ansprüche 3-5 umfasst.

## Revendications

1. Procédé de fourniture de services mobiles, comprenant :
la réception (302), par un serveur de centre de gestion (701), depuis un moteur de service (703), d'une requête de vérification de souscription de groupe comprenant un ID de service et un ID de groupe, la requête de vérification de souscription de groupe étant envoyée par le moteur de service quand le moteur de service reçoit (301) depuis un serveur d'application un premier message de service comportant l'ID de groupe et l'ID de service ;
la vérification (303), par le serveur de centre de gestion, de si un groupe associé à l'ID de groupe a souscrit à un service indiqué par l'ID de service en fonction d'un indice de souscription à un service de groupe ;
le renvoi (304), par le serveur de centre de gestion, d'une réponse de vérification au moteur de service, la réponse de vérification étant une réponse de vérification positive ou une réponse de vérification négative, et la réponse de vérification positive étant utilisée pour déclencher le moteur de service afin d'obtenir un ID d'utilisateur de groupe relié à l'ID de groupe et envoyer (305a-305n) un second message de service à un terminal.

2. Procédé selon la revendication 1, dans lequel la réponse de vérification positive comporte :
une adresse d'un serveur de gestion d'informations de groupe pour mémoriser une corrélation entre l'ID de groupe et un ID d'utilisateur dans le groupe ; ou
un ID d'utilisateur de groupe relié à l'ID de groupe.

3. Serveur de centre de gestion (701) de services mobiles, comprenant :
un récepteur (801), configuré pour recevoir depuis un moteur de service (703) une requête de vérification de souscription comprenant un ID de service et un ID de groupe, la requête de vérification de souscription de groupe étant envoyée par le moteur de service quand le moteur de service reçoit (301) depuis un serveur d'application un premier message de service comportant l'ID de groupe et l'ID de service ; et
un processeur (801), configuré pour vérifier si un groupe associé à l'ID de groupe a souscrit à un service associé à l'ID de service en fonction d'un indice de souscription à un service de groupe, et renvoyer une réponse de vérification au moteur de service, la réponse de vérification étant une réponse de vérification positive ou une réponse de vérification négative, et la réponse de vérification positive étant utilisée pour déclencher le moteur de service afin d'obtenir un ID d'utilisateur de groupe relié à l'ID de groupe et envoyer (305a-305n) un second message de service à un terminal.

4. Serveur de centre de gestion (701) selon la revendication 3, comprenant en outre :
une unité de gestion d'informations de groupe (804), configurée pour mémoriser l'ID de groupe associé au groupe et l'ID d'utilisateur dans le groupe ; et
une mémoire (803), configurée pour mémoriser l'indice de souscription de service de groupe comprenant une corrélation entre l'ID de groupe et au moins un ID de service associé à un ID de groupe.

5. Serveur de centre de gestion (701) selon la revendication 3, dans lequel la réponse de vérification positive comporte :
une adresse d'un serveur de gestion d'informations de groupe pour mémoriser une corrélation entre l'ID de groupe et l'ID d'utilisateur dans le groupe ; ou
un ID d'utilisateur de groupe relié à l'ID de groupe.

6. Système de fourniture de services mobiles comprenant un serveur d'application (702), un moteur de service (703), un terminal utilisateur (704), et un serveur de gestion d'informations de groupe (705), comprenant en outre un serveur de centre de gestion (701) selon l'une quelconque des revendications 3 à 5.
